# EUROPEAN PATENT SPECIFICATION

(11) **EP 3 717 841 B1**
(45) Date of publication and mention of the grant of the patent: **28.05.2025**
(21) Application number: 18883526.8
(22) Date of filing: 28.11.2018
(51) Int. Cl.: F24T 10/13, F28D 20/00, F24T 10/30

(54) **ARRANGEMENT AND METHOD FOR OPTIMAL ENERGY STORAGE AND RECAPTURING OF THERMAL WELLS**
ANORDNUNG UND VERFAHREN ZUR OPTIMALEN ENERGIESPEICHERUNG UND ZUR RÜCKGEWINNUNG VON THERMISCHEN BOHRUNGEN
AGENCEMENT ET PROCÉDÉ POUR LE STOCKAGE ET LA RECAPTURE OPTIMAUX D'ÉNERGIE DE PUITS THERMIQUES

(30) Priority: 30.11.2017 FI 20176080
(43) Date of publication of application: 07.10.2020
(73) Proprietor: Double M Properties Ab, 67100 Kokkola (FI)
(72) Inventor: KESKI-RAHKONEN, Aleksi, 67100 Kokkola (FI)
(74) Representative: Kolster Oy Ab
(86) International application number: PCT/FI2018/050860
(87) International publication number: WO 2019/106235

(56) References cited:
- EP-A1- 3 118 558
- WO-A2-2018/016972
- CN-U- 206 291 514
- KR-A- 20180 058 578
- SE-B- 408 087
- US-A1- 2010 307 734
- US-A1- 2011 108 233
- HAQ HAFIZ M K U ET AL: "Simulated thermal response test for ground heat storage: Numerical and analytical modeling of borehole", 2016 IEEE INTERNATIONAL CONFERENCE ON RENEWABLE ENERGY RESEARCH AND APPLICATIONS (ICRERA), IEEE, 20 November 2016 (2016-11-20), pages 291 - 296, XP033079579, DOI: 10.1109/ICRERA.2016.7884554

## Description

### Background of the invention

The invention relates to an arrangement according to claim 1, by which underground thermal wells used as heat storages may be replenished and harvested with optimal thermo-economic results.

The invention also relates to a method as claimed in the preamble of claim 4, by means of which such optimal storing and recapturing may be implemented.

Storing thermal energy is becoming more and more important, so that the viability of the solar energy potential could be further improved. In the northern latitudes, in particular, such as the Nordic countries and the northernmost parts of America, where solar energy is mostly available only in the summer months and the need for heating is at its highest in the winter, making storage possible plays a major role. Various technologies for storing thermal energy have been the object of many studies over the past decades. In the above work, most of the usage experiences have been gathered from storing energy and making use of ground heat from bore wells made in bedrock.

In ground heat systems, the bedrock surrounding the bore well cools down by approximately 3 degrees in the long run when it is normally loaded. By directing surplus heat created in the heating system to the bedrock, it is possible to reduce the amount of energy harvested from the thermal energy naturally present in the bedrock, whereby the temperature of the bedrock may be maintained or even raised. This way, the so-called COP values of thermal recovery may be improved.

Borehole thermal energy storages (BTES) are typically used for storing heat in a rocky soil and soil layers. The depth of the bore wells used in the systems in such bedrock storages is usually approximately 100 to 150 metres. In soil layers, the depth of the bore wells is largely dependant on the quality of the soil layer. Bore wells thermal energy storages may be so called "open" or "closed" ones. In closed bore well storages, heat transfer fluid circulates in a closed circuit (Ground Heat Exchanger - GHX), in which heat is transferred to the soil layer or bedrock by conduction through the walls of pipes installed in it. One such solutions is shown in the patent publication US 2010/0307734. In open bore well storages, implementable in bedrock, the water circulating in the system is in direct contact with the rock walls of the borehole. It has been noted that the efficiency of heat transfer of an open bore well storage is better than that of a closed one. However, chemical problems may emerge in open systems due to metals and solids dissolving in the water, see for example Nordell, B. & Söderlund, M., (2006), Solar Energy and Heat Storage.

Such bore well storage has been researched, for example, in Okotoks, Alberta, Canada, where in 2007 the Drake Landing solar energy community was established, where the surplus solar energy obtained in the summer is stored into the ground. Another bore well storage system is known from CN 206 291 514 U.

A major problem with the prior art solutions is that heating a bore well storage takes up a lot of time. For example, at said Drake Landing site, the temperature of the storage became stable only after three years from the start of the storing. A second major problem is that the heat loss of a heat storage is very large. It is estimated that 40 % of the energy directed into the storage is lost as leaks to the structural layer of the soil or bedrock. If the flow of groundwater taking place in the storage is notable, the heat loss is significantly more than this.

In solutions of the known kind, further problems result from the fact that the quantity of piping becomes very high when larger bore well fields are used. This means that the heat distribution system and controlling it becomes very complex.

### Brief description of the invention

An object of the invention is thus to develop an arrangement and a method for utilizing such an arrangement to enable the aforementioned problems to be for the most part solved. The object of the invention is thus achieved by a method and system, which are characterized by what is disclosed in the characterizing parts of independent claims 1 to 4. Preferred embodiments of the invention are disclosed in the dependent claims.

The basic idea of the invention is that by monitoring the temperature in different parts of the bore well storage, the parts of the storage may primarily be heated where the temperature has decreased below a separately definable threshold value.

With the invention, significant advantages may be achieved compared to the prior art technology. Therefore, the system according to the invention allows, for example, the utilization of thermal energy without a specific heat exchanger. Because the temperature in each part of the heat storage is well known, the circulating fluid of a heating system connected to it may be led to the exact area of the storage from where the targeted amount of energy may be harvested.

Because the system of the invention continuously monitors the temperature in different parts of the storage and the parts of the storage are primarily heated where the temperature has decreased below a separately definable threshold value, storing of energy is furthermore efficient. The thermal energy directed into the system always reaches such a part of the storage, which is able to receive the transferred thermal energy.

As it is possible to utilize effectively the energy content transferred into the storage, it is also possible to avoid the need to connect different kind of temporary or buffer storages to the system, which tend to increase the costs of a bore well thermal energy storage.

By connecting the wells of the system to independently controllable sectors, the quantity of piping that the system requires may be substantially decreased at the same time as the flow pressure of the carrier fluid is evened out in the pipelines and collectors in the bore wells. Such an arrangement also allows the heat distribution system to be simplified, and better targeting of heat storage and recapturing.

Further advantages of the invention are presented in the following with a more detailed description of particular embodiments of the invention.

### Brief description of the drawings

In the following, some preferred embodiments of the invention will be explained in more detail and with reference to the accompanying drawing, in which
Figure 1 is a flow chart of a first embodiment of the arrangement,
Figure 2 shows a variation of the embodiment of Figure 1 of a schematic positioning of bore well and their pipelines in an execution thereof,
Figure 3 is an example of implementation of a flow carried out in bore well,
Figure 4 shows a second variation of the embodiment of Figure 1 of sector-like joining of bore wells and their pipe lines,
Figures 5a and 5b are a flow chart of a different embodiment of the arrangement, and
Figure 6 shows a schematic positioning of a tank and bore wells in the embodiment of Figures 5a and 5b.

### Detailed description of preferred embodiments

The present figures do not show the arrangement for optimal energy storage and recapturing of thermal wells in scale but the figures are schematic, illustrating the general structure and operation of the preferred embodiments. The structural parts shown by reference numbers in the attached figures then correspond to the structural parts marked by reference numbers in this specification.

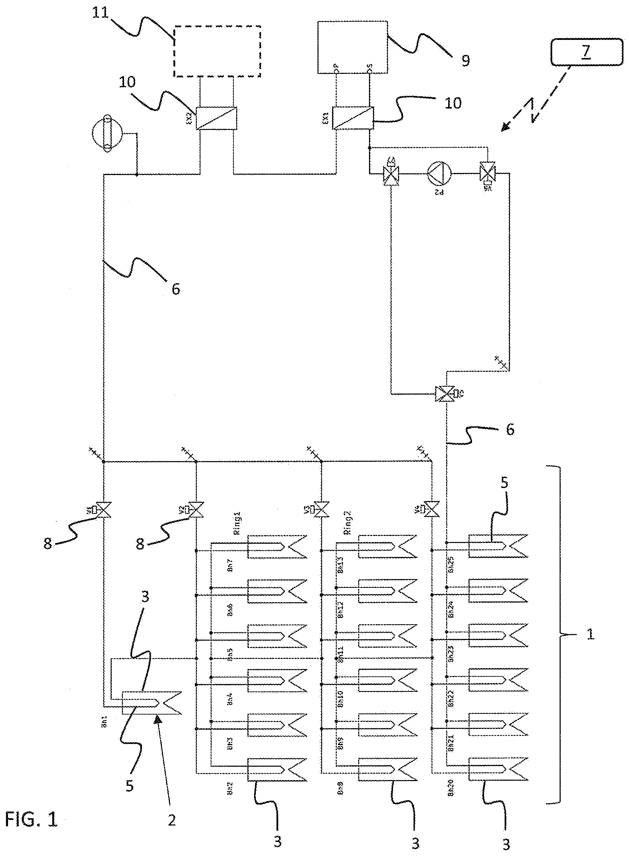

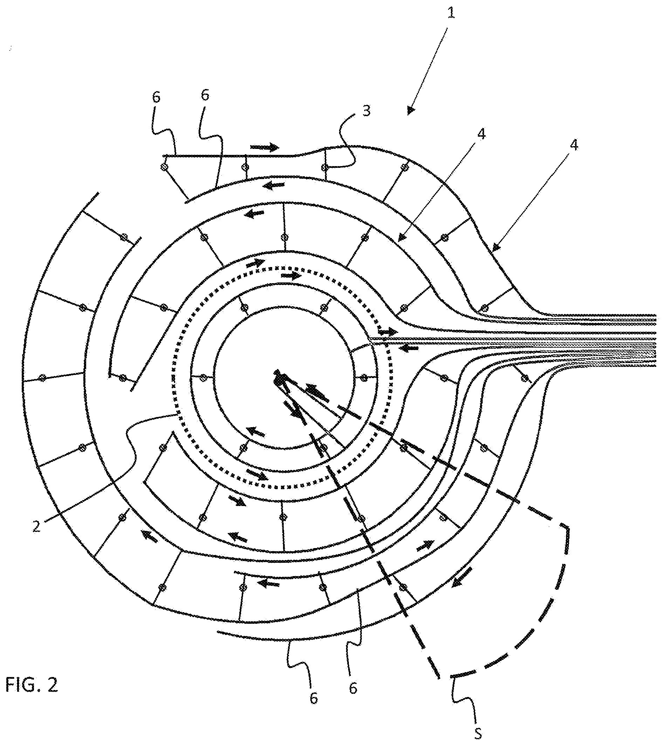

The first embodiment of the arrangement according to Figures 1 and 2 comprises a thermal storage 1 having a centre storage 2 surrounded by bore wells 3 arranged circularly. The circles in this embodiment are advantageously arranged to be substantially concentric whereby there are two or more circles 4. Figure 1 shows by way of example three circles, and Figure 2 two circles surrounding the centre storage. In the middle of the field there is, as shown in Figure 1, one bore well forming the centre storage, and this is surrounded by a circle that has six bore wells, the next circle 12 bore wells, and the outermost circle 18 bore wells, only part of which are shown in the Figure. In Figure 2, on the other hand, there are seven bore wells in the middle of the field, which form the centre storage, surrounded by circles with 12 and 18 bore wells. Obviously, a circle may have more wells, and there may be only two circles or more than three circles, as needed. A circle furthermore need not be a round circle according to the figure, but shapes that are more organic are also an option. The number of circles primarily depends on the amount of energy that can be transmitted to the system from solar collectors or other appropriate sources of heat connected to it.

It is advantageous to bore the aforementioned bore wells to no more than 60 metres deep, at least in the Finnish bedrock. The reason is that the flow of water in the bedrock become significantly stronger deeper than this. For the above reason, heat emission taking place uncontrollably from the bore well to its surroundings becomes so high at greater depths that the thermal energy directed to the bore well would for the most part be lost. When the arrangement is utilized in conditions other than the soil and bedrock of Finland, the geothermal characteristics at each location must be examined to ensure an advantageous boring depth. In the tests carried out, the bore well has been drilled by using a rather common drill bit size in Finland, that is, with the diameter of 140 mm on the soil layer above rock, and in the bedrock with the diameter of 115 mm. The diameter of the hole of the bore well is essentially affected by the structure of collectors on the market, to be installed in the bore well, so other hole sizes may be successfully used.

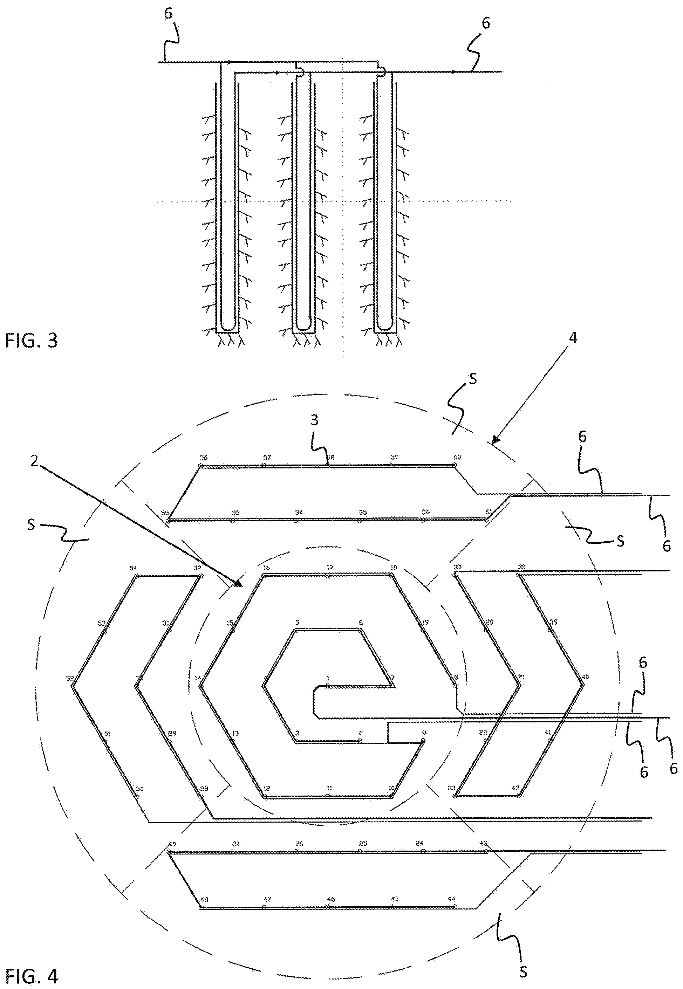

The collectors 5 installed in the bore wells are arranged to be in flow communication with each other by means of a pipeline 6 to form a closed flow circuit. The path of such a flow may be primarily controlled by valves 8 adapted in each circle and adjusted by a control unit 7. Of course, each bore well 3 may also be equipped with its own valve, whereby the flow may be adjusted at the accuracy of both the circle 4 and a single bore well 3. As shown in Figure 1, in this embodiment, there are two parallel pipelines adapted along each circle, one having the collector input flow connected thereto, and the other with the collector output flow connected thereto. Cf. also Figure 3. This way, the bore wells along the same circle are connected in parallel with respect to each other, whereby it is possible to lead warm carrier fluid to each bore well separately along the pipelines. In this embodiment, the carrier fluid mentioned above is referred to as heat transfer fluid, whereby its purpose is to heat the heat storage 1 surrounding the bore well.

The bore wells 2, 3 according to the present embodiment and solar collectors or other heat sources 9 connected to the system may even utilize a common flow system. Therefore, the entire system may use the same heat transfer fluid, such as propylene glycol. This way it is possible to avoid one or more heat exchangers 10 otherwise installed between the bore wells and heat source.

The arrangement of Figures 1 and 2 works so that from the solar collectors or another heat source 9 of the system, suitable for the purpose, such as industrial waste heat, thermal energy is stored in a known manner to the heat transfer fluid. This thermal energy is primarily utilized for heating a real estate 11, or similar, which is connected to the system and/or producing hot domestic water. Following the primary use, the thermal energy left in the heat transfer fluid is led to the heat storage 1 according to the present embodiment. Thermal energy is in this case transferred to the centre storage 2 and bore wells 3 arranged to surround it. In the embodiment according to Figure 1, the centre storage comprises one bore well whereas in the embodiment of Figure 2 the centre storage comprises a plurality of bore wells. When the temperature at the centre storage has reached the temperature of the heat transfer fluid, the further transfer of thermal energy begins one well and/or sector and/or circle at a time, starting with the bore well on the innermost circle and proceeding to the bore wells along the outermost circle. The flow of the heat transfer fluid is controlled by means of the control unit 7 with conventional shutter and three-way valves 8, which open up a flow path to a circle, sector, or even a single bore well, one after the other.

Most of the thermal energy is thus stored in the centre storage 2 of the heat storage 1, which thus obtains the highest temperature value. As the radial distance from the centre storage increases, the temperature values of the bore wells 3 are allowed to decrease little by little. Therefore, the temperature values measured in the most peripheral bore wells are in the arrangement being discussed clearly lower than the values measured in the centre storage. A heat distribution according to a Gaussian curve of sorts in the heat storage 1 guarantees that the centre storage can always be kept adequately warm. At the same time, the maintaining of the temperature of the centre storage is achieved with as few heat transfers as possible.

The heating of the centre storage 1 thus having proceeded to the outermost circle, the arrangement begins to maintain the thermal energy storage formed by the centre storage 2 and the bore wells 3 of the circles 4 surrounding it. In this case, the control unit 7 continuously compares the temperature of the heat transfer fluid from the heat source with the temperature of the bore well, circle or part of the circle in question. As the temperature of the arriving heat transfer fluid exceeds the prevailing temperature of the heat storage part encountered, the valve 8 opens, and the arriving heat transfer fluid is first led to this part of the heat storage. Therefore, the part of the heat storage, i.e. bore well or group of bore wells, radially outward from the centre of the storage, is heated whose own temperature is below the temperature of the arriving heat transfer fluid. After this, the transfer of the thermal energy contained in the heat transfer fluid continues radially outward a circle or part of a circle at a time. This establishes as even as possible a heat distribution in which the centre part of the heat storage is always the warmest, with the temperature evenly decreasing towards the outer edge of the storage. This even heat distribution guarantees the biggest and temporally the longest storing of thermal energy.

The heat distribution maintained in the heat storage 1 is determined by the bedrock or soil layer geothermal characteristics, and together with the amount of thermal energy from one or more heat sources 9 it forms the temperature profile of the heat storage in a particular embodiment of the present arrangement. Such a temperature profile, in turn, forms the basic setting set for the control unit 7. By controlling the valves 8 of the heat storage, the control unit shifts the flow of the heat transfer fluid, in accordance with the temperature profile, to the most optimal bore well 3 or bore well group from the point of view of storing. During the storage process, this carrier fluid is led to the bore wells radially outward from the centre storage of the heat storage. As the temperature of the arriving heat transfer fluid exceeds the prevailing temperature of the heat storage part encountered, the carrier fluid is led to this part of the heat storage to increase its temperature to match the set temperature profile.

The heating of the centre storage 1 thus having proceeded to the outermost circle, the arrangement begins to maintain the thermal energy storage formed by the centre storage 2 and the bore wells 3 of the circles 4 surrounding it. In this case, the control unit 7 continuously compares the temperature of the heat transfer fluid arriving from the heat source with the target temperature of the bore well, circle or part of the circle in question. As the temperature of the arriving heat transfer fluid exceeds the prevailing temperature of the heat storage part encountered, the valve 8 opens, and the arriving heat transfer fluid is first led to this part of the heat storage. In this embodiment of the arrangement, the storage is also heated radially outward from the centre by leading the heat transfer fluid to that part of the heat storage, i.e. bore well or group of bore wells whose own temperature is below the temperature of the arriving heat transfer fluid. After this, the transfer of the thermal energy contained in the heat transfer fluid continues radially outward a circle or part of a circle at a time.

Figure 2 describes a second preferred embodiment of this arrangement. In it, the pipelines 6 are not adapted to surround the bore wells 3 circularly, only, but the circles are divided into a plurality of sectors, the sectors being served by a dedicated pair of pipelines. With such an arrangement, the distribution of the heat transfer fluid may be controlled to the desired bore well faster and more precisely. With an arrangement like this, it is also easier to implement the heat transfer between the heat transfer fluid and storage field by sectors. One of such sectors is schematically shown in Figure 2 with reference S. The size of the sector may vary, having a central angle of approximately 15 to 180 degrees, advantageously 45 to 60 degrees. Like in the above, the storage field is heated radially outwards from the centre of the storage, starting with the first part of the circle of the heat storage 1 whose temperature is below the temperature of the arriving heat transfer fluid. After this, the transfer of the thermal energy to the storage continues in the sector radially outward a circle or part of a circle at a time. When the outermost circle sector has reached its target temperature, the heating of the next adjacent sector begins. Based on the research, it is possible this way to reach an even better heat transfer efficiency than in the alternative where the heat transfer fluid is simultaneously led to all the bore wells along the same circle.

The control unit 7 of the present arrangement may also be made adaptive. When the heat storage 1 is being heated, the goal is to increase the temperature of each bore well, circle or part of a circle to match as well as possible the predefined target temperature indicated by the basic settings of the control unit 7.

Adaptivity in this case means that the control unit 7 of the arrangement continuously monitors the amount of energy received by the heat storage 1, the entire heat storage or part of it. Thus, the task of the control unit is to keep the amount of energy received by the heat storage as large as possible at all times. This results in that when, for example, the temperature difference between the heat transfer fluid supplied to a sector of the heat storage and one returning from there is below a preset threshold value, the flow of the heat transfer fluid is directed to the next sector. The goal, however, is that the switch from one sector to the next takes place so that the received amount of energy is kept as high as possible at all times.

The heating and production of warm water of the real estate 11 conventionally connected to the system may be implemented by utilizing the aforementioned solar collector or other heat sources 9 connected to the system. In the autumn and winter, in particular, the amount of thermal energy produced by solar collectors, particularly, is often too small and a source of additional heat is needed. In such a case thermal energy may be retrieved from the heat storage 1 devised as described in the above. So, instead of leading heat transfer fluid containing surplus heat into the heat storage, the heating of the coldish heat transfer fluid circulated in it is commenced. When the energy content of the heat storage is utilized, the process is performed in the opposite order in relation to the previous, that is, the heat transfer fluid is led in the arrangement first to the coldest bore well or bore well group as regards its heat content, from which the process continues radially towards the centre of the heat storage advantageously a circle 4, a part of a circle, or bore well 2, 3 at a time.

When the temperature of the heat storage 1 is notably higher than the heat sources 9 utilized to heat the real estate 11 and to produce hot water, a substantially better efficiency than before may be obtained for a heat exchanger 10 of the real estate 11.

In the embodiment of Figure 2, the sector-shaped control is mainly implemented with well-specific valves. A simpler second preferred embodiment of the arrangement is achieved by the implementation according to Figure 4. In such a case, the bore wells 3 are connected by pipelines 6 into separate groups. These separately controlled groups form sectors S circularly surrounding the centre storage 2. In this exemplary embodiment of the figure, there are four sectors along one circle 4 that surround the centre storage. With an arrangement like this, it is even easier to implement the heat transfer between the heat transfer fluid and storage field by sectors. In this embodiment too, the size of the sector formed by the bore well group implemented may vary, having a central angle of approximately 15 to 180 degrees. In the embodiment according to the figure, the central angle of a sector is 90 degrees. Like in the above, the storage field is heated radially outwards from the centre of the storage, starting with the first part of the circle of the heat storage 1 whose temperature is below the temperature of the arriving heat transfer fluid. After this, the transfer of the thermal energy to the storage continues radially outward a sector and a circle at a time.

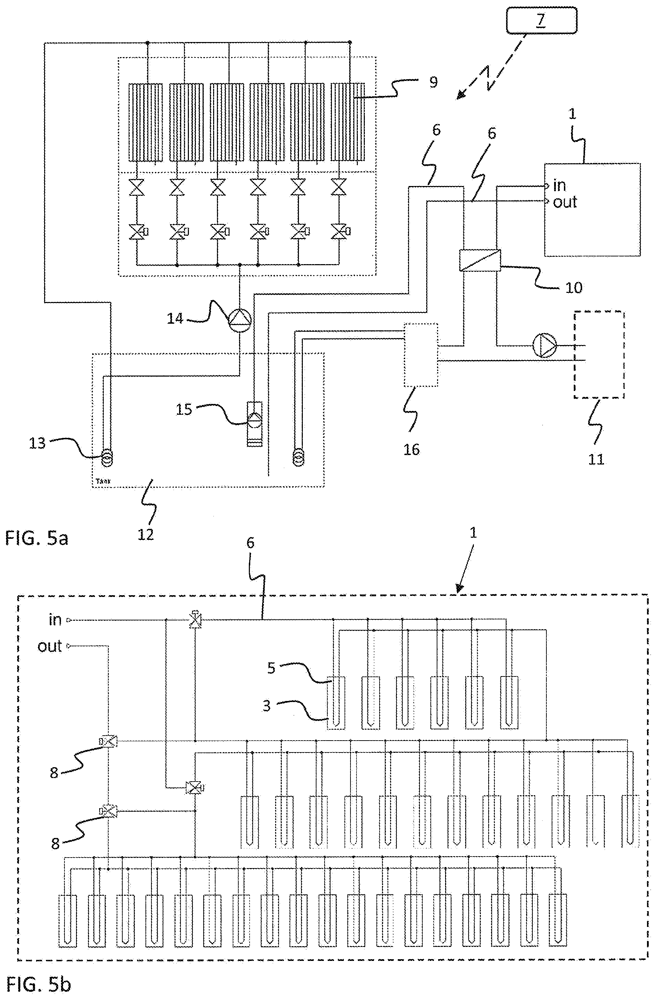

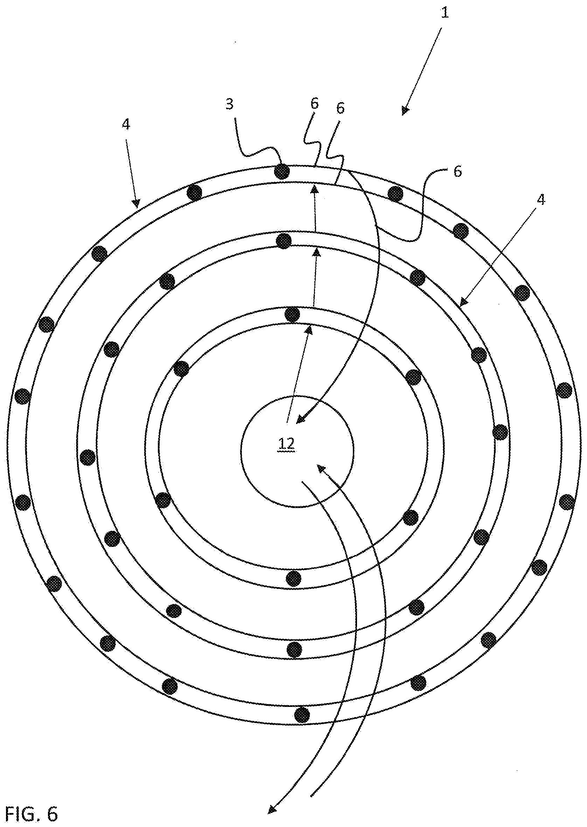

In a fourth preferred embodiment according to Figures 5a, 5b and 6, an arrangement has been set up where the centre storage 2 is formed by a closed and advantageously underground tank 12. In the embodiment of the figures, the tank is surrounded in a substantially concentric and circular manner by the bore wells 3, there being two or more circles 4. The location of the bore wells may, of course, differ from what is disclosed without any major drawback to the operation. The tank, which in this embodiment replaces the innermost bore well as explained, or the centre storage formed by the innermost bore wells of Figures 2 or 4, has a volume the size of which may vary from a few cubic metres to tens or even hundreds of cubic metres. It has been discovered in the tests carried out that a smallish tank, advantageously 3 to 4 m³ results in an adequate buffer storage of heat up to the 63rd parallel. The tank in such a case is advantageously throughout insulated with conventional insulation materials to avoid unnecessary heat losses.

Figures 5d and 6 show by way of example three circles 4 surrounding said tank 12, the innermost circle having six bore wells 3, the centre circle 12 bore wells, and the outermost circle 18 bore wells. Obviously, a circle may have more wells, and there may be only two circles or, on the other hand, more than three circles, as needed. The number of circles as well as the size of the centre well primarily depend on the amount of energy that can be transmitted to the system from solar collectors or other source of heat connected to it.

The bore wells 3 are arranged to be in flow communication with each other by means of a pipeline 6. As described in the above, the collectors 5 installed in the bore wells are arranged to be in flow communication with each other by means of the pipeline 6 to form a closed flow circuit. Cf. also Figure 3. The route of such a flow may be primarily controlled by valves 8 adapted in each circle and adjusted by a control unit 7. As shown in Figure 5b and 6, there are two parallel pipelines in each circle, one having the collector input flow connected to it, and the other with the collector output flow connected to it. This way the bore wells along the same circle are connected to each other in parallel. The route of the flow may be primarily controlled by shutter and three-way valves adapted in each circle. This way, it is possible to lead warm carrier fluid to the bore wells along the pipelines, the purpose of which is to heat the heat storage surrounding the wells. Of course, each bore well may also be equipped with its own valve, whereby the flow may be adjusted at the accuracy of both the circle, part of a circle, and a single bore well 3.

The system operates so that the carrier fluid in the tank 12, in this embodiment referred to as storage fluid, which may be ordinary (ground) water, is heated by thermal energy obtained from an external source of heat, as described in the above. To transfer heat to the storage fluid in the tank 12, a first heat exchanger coil 13 with its pump 14 have been adapted in it. If the storage fluid in the tank is heated by means of a plurality of heat sources 9 producing thermal energy, a dedicated heat exchanger need to be arranged in the tank for each heat source.

When the temperature of the storage fluid in the tank 11 exceeds a target temperature according to a predefined heat profile, the thermal energy originating from the heat source 9 is led to a bore well or bore well group along the next circle. In this case, thermal energy produced by solar collectors, for example, is started to be transferred from the tank by a pump 15, for example, by means of the storage fluid along the pipe line 6 to the circularly arranged bore wells one circle 4 at a time, starting with the innermost circle and proceeding to the outermost circle, continuously maintaining, however, the temperature of the storage already heated.

As heating has proceeded to the outermost circle 4, the system starts to maintain the thermal energy storage 1 formed by the tank 12 and bore wells 3. The temperature of the storage fluid in the tank is in such a case continuously compared with the prevailing temperature in each bore well or bore well group. The comparison is always carried out one well or group at a time, proceeding in the storage field radially outward from the centre. When encountering the first part of a heat storage, who's current temperature is below the temperature of the storage fluid in the tank, the valve 8 opens and consequently storage fluid is led to this part of the heat storage. After this, the transfer of the thermal energy to the bore well continues radially outward a bore well or circle at a time. Therefore, the part of the heat storage, radially outward from the centre of the storage, is always heated whose own temperature is below the temperature of the storage fluid in the tank. This establishes as even as possible a heat distribution in which the storage fluid of the tank at the centre is always the warmest, with the temperature evenly decreasing towards the outer edge of the storage. This even heat distribution guarantees the most extensive possible storing of thermal energy.

In this embodiment, too, it is obviously possible to apply the arrangement described in the above, where the heat transfer fluid is led to the bore well a circle and its sector at a time. The size of the sector may vary, having a central angle of approximately 15 to 180 degrees, advantageously 45 to 60 degrees. In this embodiment, too, the storage field is thus heated radially outwards from the centre of the storage, starting with the part of the circle of the heat storage whose temperature is below the temperature of the storage fluid in the tank. After this, the transfer of the thermal energy to the storage continues in the sector radially outward a circle or part of a circle at a time. When the outermost circle sector has reached its target temperature, the heating of the next adjacent sector begins.

Conventionally the heating of the real estate 11 and production of warm water may be implemented by utilizing the aforementioned solar collectors. In the autumn and winter, in particular, the amount of thermal energy produced by solar collectors is too small and a source of additional heat is needed. In such a case, thermal energy may be recaptured from the heat storage 1, whose temperature is notably higher than the heat sources 9 otherwise utilized to heat the real estate 11 and to produce hot water, which substantially improves the efficiency of the heat exchanger 10 of the real estate. In this embodiment of the arrangement, the transfer of thermal energy takes place so that as the temperature of the storage fluid in the tank 12 decreases below a specific set value, a flow between the tank 12 and bore wells 3, controlled by the pump 15, starts, by which thermal energy is transferred from the heat storage by the storage fluid back to the tank from the circularly arranged bore wells or bore well group one at a time.

On the other hand, the temperature of the storage fluid in the tank 12 may be raised by a heat pump 16 connected to the tank. The same heat pump is advantageously used in the manner referred to in the above for heating the real estate and producing hot water.

A person skilled in the art will find it obvious that, as technology advances, the basic idea of the invention may be implemented in many different ways. The invention and its embodiments are thus not restricted to the above-described examples but may vary within the scope of the claims.

## Claims

1. An arrangement for optimal energy storage and recapturing of thermal wells,
such an arrangement comprising a heat storage (1) having:
a heat transfer fluid,
an underground centre storage (2, 12),
bore wells (3) surrounding the centre storage (2, 12) in a substantially concentric manner, there being two or more circles (4), whereby
the centre storage (2, 12) and the bore wells (3) are arranged to communicate with each other and with one or more heat sources (9) leading thermal energy to the system by means of a pipe-line (6), the
heat storage (1) being provided with valves (8), controlled by a control unit (7), as to control the circulation of the heat transfer fluid,
**characterised in that**
the control unit (7) is arranged to continuously compare the temperature of the heat transfer fluid arriving from the heat source (9) with the target temperature of a bore well (3) encountered,
the bore wells (3) are connected in parallel with respect to each other, whereby it is possible to lead warm carrier fluid to each bore well separately along the pipelines, and
the bore wells (3) in each circle are connected by pipelines (6) into separate groups the flow of which are separately controlled by the valves (8), whereby
these groups are arranged to form sectors (S) circularly surrounding the centre storage (2),
which each sector is arranged to separately receive thermal energy such, that
the storage field is configured to be heated radially outwards from the centre of the storage, starting with the first part of the circle of the heat storage whose temperature is below the temperature of the arriving heat transfer fluid, and to continue in the sector radially outward a circle or part of a circle at a time, and, when the outermost circle sector has reached its target temperature, to begin the heating of the next adjacent sector.

2. An arrangement as claimed in claim 1, **characterised in that** the centre storage (2) comprises a closed and advantageously underground tank (12).

3. An arrangement as claimed in claim 2, **characterised in that** the tank (12) is insulated from its surroundings by insulating materials.

4. A method for optimal storage and recapturing of thermal wells, whereby
thermal energy is collected in heat transfer fluid from one or more heat sources (9)
the thermal energy is led by a heat transfer fluid to an underground centre storage (2, 12) and further to bore wells (3),
the heat sources (9), the underground centre storage (2, 12) and the bore wells (3) are communicating with each other via pipelines (6), whereby
the bore wells (3) are arranged substantially circularly around the underground centre storage (2, 12) so that
the thermal energy is transferred to the bore well circles one bore well (3) and one circle (4) at a time, starting with the centre storage (2, 12) and proceeding outwards,
**characterised by**
dividing the bore well circles (4) into groups forming a plurality of adjacent sectors (S),
wherein the bore wells (3) are connected in parallel with respect to each other, whereby it is possible to lead warm carrier fluid to each bore well separately along the pipelines (6), and
the flow of the thermal energy in the bore wells (3) is controlled by valves (8),
leading the heat transfer fluid first and foremost to the centre storage (2, 12) and from there leading the heat transfer fluid radially outwards to bore wells (3) in a sector (S) at a time, proceeding to the bore wells along the radially outermost circle,
continuously comparing the temperature of the heat transfer fluid arriving from the heat source (9) with the prevailing temperature in each of the bore well encountered by means of a control unit (7), and
as the temperature of the heat transfer fluid exceeds the prevailing temperature of the bore well (3) encountered, leading the heat transfer fluid to said bore well thus evening out the temperature difference between the heat transfer fluid and the bore well encountered, continuing the transfer of the heat transfer fluid in the sector radially outward a circle or part of a circle at a time, and
when the outermost part of a sector has reached its target temperature according to a set temperature profile, a heating of an adjacent sector (S) is started.

5. A method as claimed in claim 4, **characterised by** utilizing a fluid circulating in a heat exchanger (10) connected to a heat source as the heat transfer fluid, transferring thermal energy collected in the heat sources (9) to the underground centre storage (2, 12) and further to bore wells (3).

6. A method as claimed in claim 4, c**haracterised** by utilizing a storage fluid in the centre storage (2, 12) as the heat transfer fluid transferring thermal energy collected in the heat sources (9) to the underground centre storage (2, 12) and further to bore wells (3).

7. A method as claimed in any one of claims 4 to 6, c**haracter**- **ised** in that the central angle of the sector (S) may be set to be from 15 to 90 degrees.

8. A method as claimed in claim 7, **characterised in that** the central angle of the sector (S) may most advantageously be set to be from 45 to 60 degrees.

9. A method as claimed in any one of claims 4 to 8, **character- ised** in that thermal energy is retrieved from the heat storage (1) by leading the heat transfer fluid primarily to the bore well circle having the coldest thermal content

## Patentansprüche

1. Anordnung zur optimalen Energiespeicherung in und - rückgewinnung von Wärmeschächten,
wobei eine solche Anordnung einen Wärmespeicher (1) umfasst, der aufweist:
ein Wärmeübertragungsfluid,
einen unterirdischen Zentralspeicher (2, 12),
Bohrschächte (3), die den Zentralspeicher (2, 12) auf eine im Wesentlichen konzentrische Weise umgeben, wobei zwei oder mehr Kreise (4) vorhanden sind, wodurch
der Zentralspeicher (2, 12) und die Bohrschächte (3) eingerichtet sind, um miteinander und mit einer oder mehreren Wärmequellen (9) verbunden zu sein, die mittels einer Rohrleitung (6) Wärmeenergie zu dem System führen,
wobei der Wärmespeicher (1) mit Ventilen (8) versehen ist, die von einer Regeleinheit (7) geregelt werden, um den Umlauf des Wärmeübertragungsfluids zu regeln,
**dadurch gekennzeichnet, dass**
die Regeleinheit (7) eingerichtet ist, um die Temperatur des Wärmeübertragungsfluids, das von der Wärmequelle (9) eintrifft, kontinuierlich mit der Zieltemperatur eines angetroffenen Bohrschachts (3) zu vergleichen,
wobei die Bohrschächte (3) in Bezug aufeinander parallel verbunden sind, wodurch es möglich ist, warmes Trägerfluid getrennt entlang der Rohrleitungen zu jedem Bohrschacht zu führen, und
die Bohrschächte (3) in jedem Kreis durch Rohrleitungen (6) in getrennte Gruppen verbunden sind, deren Strömungen getrennt durch die Ventile (8) geregelt werden, wodurch
diese Gruppen eingerichtet sind, um Sektoren (S) zu bilden, die den Zentralspeicher (2) kreisförmig umgeben,
wobei jeder Sektor eingerichtet ist, um Wärmeenergie derart getrennt zu empfangen, dass
das Speicherfeld dazu ausgestaltet ist, von der Mitte des Speichers radial nach außen, beginnend mit dem ersten Teil des Kreises des Wärmespeichers, dessen Temperatur unter der Temperatur des eintreffenden Wärmeübertragungsfluids liegt, und jeweils fortgesetzt in dem Sektor radial von einem Kreis oder Teil eines Kreises nach außen erwärmt zu werden und, wenn der äußerste Kreissektor seine Zieltemperatur erreicht hat, das Erwärmen des nächsten benachbarten Sektors zu beginnen.

2. Anordnung nach Anspruch 1, **dadurch gekennzeichnet, dass** der Zentralspeicher (2) einen geschlossenen und vorteilhafterweise unterirdischen Tank (12) umfasst.

3. Anordnung nach Anspruch 2, **dadurch gekennzeichnet, dass** der Tank (12) durch isolierende Materialien von seiner Umgebung isoliert ist.

4. Verfahren zur optimalen Speicherung in und Rückgewinnung von Wärmeschächten, wodurch
Wärmeenergie in Wärmeübertragungsfluid von einer oder mehreren Wärmequellen (9) gesammelt wird,
die Wärmeenergie durch ein Wärmeübertragungsfluid zu einem unterirdischen Zentralspeicher (2, 12) und weiter zu Bohrschächten (3) geführt wird,
die Wärmequellen (9), der unterirdische Zentralspeicher (2, 12) und die Bohrschächte (3) über Rohrleitungen (6) miteinander verbunden sind, wodurch
die Bohrschächte (3) im Wesentlich kreisförmig um den unterirdischen Zentralspeicher (2, 12) angeordnet sind, derart dass
die Wärmeenergie zu den Bohrschachtkreisen jeweils um einen Bohrschacht (3) und einem Kreis (4), beginnend mit dem Zentralspeicher (2, 12) und nach außen fortgesetzt, übertragen wird,
**gekennzeichnet durch**
Teilen der Bohrschachtkreise (4) in Gruppen, die eine Vielzahl von benachbarten Sektoren (S) bilden,
wobei die Bohrschächte (3) in Bezug aufeinander parallel verbunden sind, wodurch es möglich ist, warmes Trägerfluid getrennt entlang der Rohrleitungen (6) zu jedem Bohrschacht zu führen, und
die Strömung der Wärmeenergie in den Bohrschächten (3) durch Ventile (8) geregelt wird,
Führen des Wärmeübertragungsfluids zuerst und in erster Linie zum Zentralspeicher (2, 12) und von dort jeweils Führen des Wärmeübertragungsfluids radial nach außen zu Bohrschächten (3) in einem Sektor (S), fortgesetzt zu den Bohrschächten entlang des radial äußersten Kreises,
kontinuierliches Vergleichen der Temperatur des Wärmeübertragungsfluids, das von der Wärmequelle (9) eintrifft, mit der vorherrschenden Temperatur in jedem der begegneten Bohrschächte mittels einer Regeleinheit (7), und
wenn die Temperatur des Wärmeübertragungsfluids die vorherrschende Temperatur des begegneten Bohrschachts (3) überschreitet, Führen des Wärmeübertragungsfluids zu dem Bohrschacht und somit Ausgleichen der Temperaturdifferenz zwischen dem Wärmeübertragungsfluid und dem begegneten Bohrschacht, jeweils Fortsetzen der Übertragung des Wärmeübertragungsfluids in dem Sektor radial außerhalb eines Kreises oder Teils eines Kreises, und
wenn der äußerste Teil eines Sektors seine Zieltemperatur gemäß einem eingestellten Temperaturprofil erreicht hat, Beginnen eines Erwärmens eines benachbarten Sektors (S).

5. Verfahren nach Anspruch 4, **gekennzeichnet durch** das Nutzen eines Fluids, das in einem Wärmetauscher (10) umläuft, der mit einer Wärmequelle verbunden ist, als das Wärmeübertragungsfluid, Übertragen von in den Wärmequellen (9) gesammelter Wärmeenergie zu dem unterirdischen Zentralspeicher (2, 12) und weiter zu den Bohrschächten (3).

6. Verfahren nach Anspruch 4, **gekennzeichnet durch** das Nutzen eines Speicherfluids in dem Zentralspeicher (2, 12) als das Wärmeübertragungsfluid, das Wärmeenergie, die in den Wärmequellen (9) gesammelt wird, zu dem unterirdischen Zentralspeicher (2, 12) und weiter zu den Bohrschächten (3) überträgt.

7. Verfahren nach einem der Ansprüche 4 bis 6, **dadurch gekennzeichnet, dass** der Zentriwinkel des Sektors (S) eingestellt werden kann, um von 15 bis 90 Grad zu betragen.

8. Verfahren nach Anspruch 7, **dadurch gekennzeichnet, dass** der Zentriwinkel des Sektors (S) am vorteilhaftesten eingestellt werden kann, um von 45 bis 60 Grad zu betragen.

9. Verfahren nach einem der Ansprüche 4 bis 8, **dadurch gekennzeichnet, dass** die Wärmeenergie von dem Wärmespeicher (1) durch Führen des Wärmeübertragungsfluids rückgewonnen wird, indem das Wärmeübertragungsfluid vor allem zu dem Bohrschachtkreis mit dem kältesten Wärmegehalt geführt wird.

## Revendications

1. Agencement pour un stockage et une recapture optimaux d'énergie de puits thermiques,
un tel agencement comprenant un stockage de chaleur (1) ayant :
un fluide de transfert de chaleur,
un stockage central souterrain (2, 12),
des puits de forage (3) entourant le stockage central (2, 12) d'une manière sensiblement concentrique, en deux cercles (4) ou plus, moyennant quoi
le stockage central (2, 12) et les puits de forage (3) sont disposés de façon à communiquer entre eux et avec une ou plusieurs sources de chaleur (9) amenant de l'énergie thermique au système au moyen d'un pipeline (6),
le stockage de chaleur (1) étant doté de vannes (8), commandées par une unité de commande (7), de façon à commander la circulation du fluide de transfert de chaleur,
**caractérisé en ce que**
l'unité de commande (7) est disposé de façon à comparer en continu la température du fluide de transfert de chaleur arrivant depuis la source de chaleur (9) avec la température cible d'un puits de forage (3) rencontré,
les puits de forage (3) sont connectés parallèlement entre eux, moyennant quoi il est possible d'amener du fluide porteur chaud à chaque puits de forage séparément le long des pipelines, et
les puits de forage (3) dans chaque cercle sont connectés par des pipelines (6) en groupes séparés dont les écoulements sont commandés séparément par les vannes (8), moyennant quoi
ces groupes sont disposés de façon à former des secteurs (S) entourant circulairement le stockage central (2),
chaque secteur étant disposé de façon à recevoir séparément de l'énergie thermique, si bien que
le champ de stockage est configuré de façon à être chauffé radialement vers l'extérieur depuis le centre du stockage, en partant de la première partie du cercle du stockage de chaleur dont la température est inférieure à la température du fluide de transfert de chaleur arrivant, et à continuer dans le secteur radialement vers l'extérieur un cercle ou une partie de cercle à la fois et, quand le secteur de cercle le plus extérieur a atteint sa température cible, à commencer le chauffage du secteur adjacent suivant.

2. Agencement selon la revendication 1, **caractérisé en ce que** le stockage central (2) comprend un réservoir fermé et avantageusement souterrain (12).

3. Agencement selon la revendication 2, **caractérisé en ce que** le réservoir (12) est isolé de son environnement par des matériaux isolants.

4. Procédé pour le stockage et la recapture optimaux de puits thermiques, moyennant quoi
de l'énergie thermique est collectée dans un fluide de transfert de chaleur depuis une ou plusieurs sources de chaleur (9)
l'énergie thermique est amenée par un fluide de transfert de chaleur à un stockage central souterrain (2, 12) et en outre à des puits de forage (3),
les sources de chaleur (9), le stockage central souterrain (2, 12) et les puits de forage (3) sont en communication mutuelle via des pipelines (6), moyennant quoi
les puits de forage (3) sont disposés sensiblement circulairement autour du stockage central souterrain (2, 12), si bien que
l'énergie thermique est transférée aux cercles de puits de forage un puits de forage (3) et un cercle (4) à la fois, en partant du stockage central (2, 12) et en poursuivant vers l'extérieur,
**caractérisé par**
la division des cercles de puits de forage (4) en groupes formant une pluralité de secteurs adjacents (S),
dans lequel les puits de forage (3) sont connectés parallèlement entre eux, moyennant quoi il est possible d'amener du fluide porteur chaud à chaque puits de forage séparément le long des pipelines (6), et
l'écoulement de l'énergie thermique dans les puits de forage (3) est commandé par des vannes (8),
l'amenée du fluide de transfert de chaleur en premier et principalement au stockage central (2, 12) et, de là, l'amenée du fluide de transfert de chaleur radialement vers l'extérieur aux puits de forage (3) dans un secteur (S) à la fois, en poursuivant avec les puits de forage le long du cercle radialement le plus extérieur,
la comparaison en continu de la température du fluide de transfert de chaleur arrivant depuis la source de chaleur (9) avec la température prévalant dans chacun des puits de forage rencontrés au moyen d'une unité de commande (7), et
lorsque la température du fluide de transfert de chaleur dépasse la température prévalant dans le puits de forage (3) rencontré, l'amenée du fluide de transfert de chaleur audit puits de forage, ce qui nivèle ainsi la différence de température entre le fluide de transfert de chaleur et le puits de forage rencontré, la poursuite du transfert du fluide de transfert de chaleur dans le secteur radialement à l'extérieur un cercle ou une partie d'un cercle à la fois, et
quand la partie la plus extérieure d'un secteur a atteint sa température cible conformément à un profil de température établi, le chauffage d'un secteur adjacent (S) est commencé.

5. Procédé selon la revendication 4, **caractérisé par** l'utilisation d'un fluide circulant dans un échangeur de chaleur (10) connecté à une source de chaleur en tant que fluide de transfert de chaleur, qui transfère l'énergie thermique collectée dans les sources de chaleur (9) au centre de stockage souterrain (2, 12) et en outre à des puits de forage (3).

6. Procédé selon la revendication 4, **caractérisé par** l'utilisation d'un fluide dans le stockage central (2, 12) en tant que fluide de transfert de chaleur, qui transfère l'énergie thermique collectée dans les sources de chaleur (9) au centre de stockage souterrain (2, 12) et en outre à des puits de forage (3).

7. Procédé selon l'une quelconque des revendications 4 à 6, **caractérisé en ce que** l'angle central du secteur (S) peut être établi de façon à être de 15 à 90 degrés.

8. Procédé selon la revendication 7, **caractérisé en ce que** l'angle central du secteur (S) peut le plus avantageusement être établi de façon à être de 45 à 60 degrés.

9. Procédé selon l'une quelconque des revendications 4 à 8, **caractérisé en ce que** de l'énergie thermique est récupérée à partir du stockage de chaleur (1) par l'amenée du fluide de transfert de chaleur principalement au cercle de puits de forage ayant la teneur thermique la plus froide.
